# NEUE EUROPÄISCHE PATENTSCHRIFT

(11) **EP 0 461 735 B2**
(45) Veröffentlichungstag und Bekanntmachung des Hinweises auf die Entscheidung über den Einspruch: **12.05.1999**
(45) Hinweis auf die Patenterteilung: 15.02.1995
(21) Anmeldenummer: 91250130.1
(22) Anmeldetag: 10.05.1991
(51) Int. Cl.: B65G 1/04

(54) **Regalanlage**
Rack installation
Installation de rayonnages

(30) Priorität: 08.06.1990 DE 4018827; 27.06.1990 DE 4020784
(43) Veröffentlichungstag der Anmeldung: 18.12.1991
(73) Patentinhaber: MANNESMANN Aktiengesellschaft, 40027 Düsseldorf (DE)
(72) Erfinder: Kühn, Werner, D-58300 Wetter (DE)
(74) Vertreter: Meissner, Peter E., Dipl.-Ing.

(56) Entgegenhaltungen:
- EP-A- 0 322 313
- EP-A- 0 416 446
- DE-A- 2 743 395
- DE-A- 3 633 171
- DE-C- 3 124 605
- FR-A- 2 393 748
- FR-B- 2 482 057
- JP-A- 1 197 211

## Beschreibung

Die Erfindung betrifft eine Regalanlage mit in Fächern eines Regals angeordneten Lagerbehältern und einem davor verfahrbaren Regalbediengerät mit mindestens einem Lasttisch mit einer Vorrichtung zum Ein- und Auslagern von Lagerbehältern, wobei die Vorrichtung aus zwei endlosen, um Umlenkräder mit vertikalen Achsen geführten Mitnehmer-Zuggliedern besteht, deren Abstand voneinander in Ein-/Auslagerrichtung mindestens der Einschubtiefe des Lagerbehälters in die Fächer des Regals entspricht und aus den Mitnehmer-Zuggliedern Mitnehmer herausragen, die in an einer Stirnseite des Lagerbehälters parallel dazu angeordnete Schlitzführungen eingreifen.

Bei einer Regalanlage nach der DE-B-33 24 349 besteht die Greifvorrichtung für die Lagerbehälter aus Platten, die in aufwendiger Weise zusammengedrückt werden und dabei die Lagerbehälter greifen. Außer dem großen Aufwand besteht ein weiterer Nachteil darin, daß ein schräg aufgenommender Behälter auch schräg wieder abgestellt wird, so daß sich Toleranzen beim Umsetzen addieren können.

Es ist ferner bekannt (EP-A-0 322 313), eine Vorrichtung zur Entnahme von Kästen vorzusehen, die auf Regalen zu beiden Seiten eines Ganges angeordnet sind und an ihren beiden Enden mit einer Entnahmegleitschiene ausgestattet sind. Die Vorrichtung verwendet zumindest eine endlose Kette mit zwei Kurbelzapfen, die in die Entnahmegleitschiene der Kästen eingreifen und wobei die beiden Kurbelzapfen derselben Kette jeweils in eine Entnahmegleitschiene eines Kastens eingreifen, wenn sich dieser in der Mitte des Ganges oberhalb der Entnahmevorrichtung befindet. Die bekannte Vorrichtung zentriert, d.h. positioniert jedoch die Lagerbehälter nicht, und es wird davon ausgegangen, daß sich ein Lagerbehälter in der mittigen Stellung vor einem Fach eines Regals befindet. Mit anderen Worten ausgedrückt ist die bekannte Vorrichtung nicht geeignet, eine Positionierung von Lagerbehältern durchzuführen.

Es ist außerdem bekannt (FR-A-2 393 748), einen einzigen Mitnehmer an einem Mitnehmerzugglied um Umlenkrollen so zu führen, daß sich der einzelne Mitnehmer parallel zur Stirnfläche des Regals bewegt.

Aufgabe der Erfindung ist es daher, eine Regalanlage so zu gestalten, daß mit geringem Aufwand ein positionssicheres Umsetzen der Lagerbehälter ermöglicht ist.

Diese Aufgabe wird durch die Merkmale des Ansprüches 1 gelöst. Der Aufwand, vor allem für die Schlitzführungen an den Lagerbehältern, ist gering und gewahrt trotzdem ein Höchstmaß an Präzision. Der geringe Aufwand zum Erlangen der Präzision macht sich vor allem bei Regalanlagen mit mehreren hunderttausend Lagerbehältern vorteilhaft bemerkbar.

Die Einlaufschrägen gewährleisten ein sicheres Einleiten der Mitnehmer in die Schlitzführungen, auch wenn die Säule des Regalbediengerätes, das bis zu 40 m hoch sein kann und oben geführt ist, in der Mitte noch schwingt. Man braucht also nicht zu warten, bis die Schwingung abgeklungen ist.

Die Schlitzführungen können vorteilhafterweise an dem Lagerbehälter befestigte vor der Stirnfläche vorstehende am Boden befestigte Platten sein. Sie können auch an den sich gegenüberliegenden Stirnflächen des Lagerbehälters vorhanden sein, so daß die Lagerbehälter von einem Regal mit Hilfe des Regalbediengerätes mit den Mitnehmerzuggliedern in ein gegenüberstehendes Regal umgesetzt werden können. Die Mitnehmerzugglieder sind vorteilhafterweise Rollenketten, aus denen die Mitnehmer als Stifte nach oben herausragen. Die Mitnehmerzugglieder sind mindestens an der dem Regal zugewandten Seite des Regalbediengerätes um zwei Umlenkrollen so geführt, daß sich die Mitnehmer parallel zur Stirnfläche des Regals bzw. des Lagerbehälters bewegen. Dieser wird somit nach Beendigung des Verschiebens und nach dem Bremsen noch eine geringe Zeit vom Mitnehmer gehalten und kann nicht von einem in dem Behälter noch rutschenden Gegenstand verschoben werden.

Vorzugsweise sind die Achsen der Umlenkräder senkrecht auf dem Lasttisch des Regalbediengeräts angeordnet.

Ein Ausführungsbeispiel der Erfindung ist in den Zeichnungen dargestellt und wird im folgenden näher erläutert. Es zeigen
- Fig. 1: ein vor einem Regal stehendes Regalbediengerät in der Seitenansicht,
- Fig. 2: die Stirnansicht von Fig. 1,
- Fig. 3: die Draufsicht auf Fig. 1,
- Fig. 4: die Führung der Zugglieder auf dem Lasttisch im größeren Maßstab,
- Fig. 5: eine Schlitzführung aus Fig. 4 in größerem Maßstab.

Zwischen zwei mit Fächern 2 für Lagerbehälter 3 versehenen Regalen 1 ist ein Regalbediengerät 4 mit Rädern 4a auf einer Schiene 4b verfahrbar. An der Säule 5 des Regalbediengerätes 4 ist ein mit einem Lasttisch 7 versehener Hubwagen 6 höhenverfahrbar.

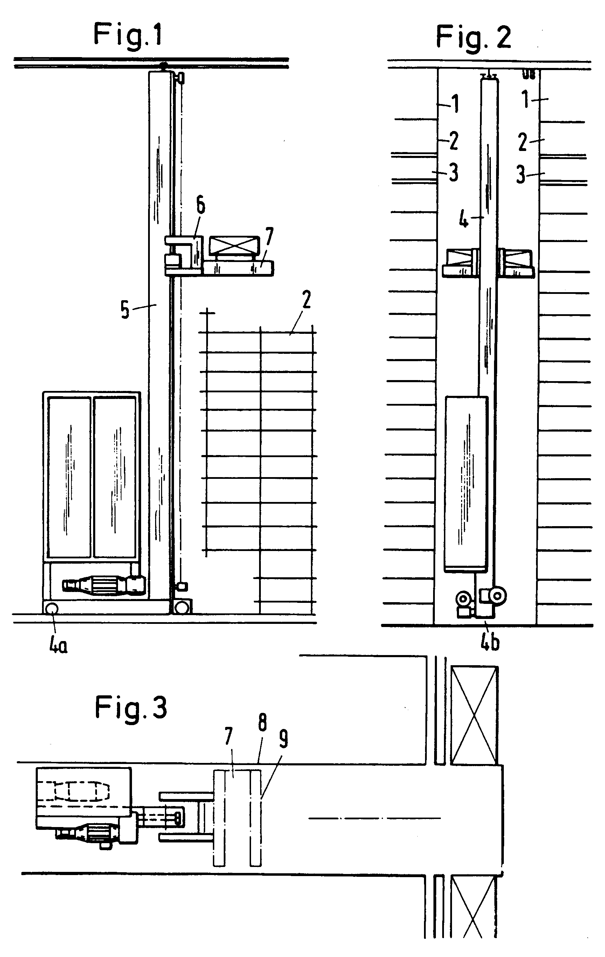

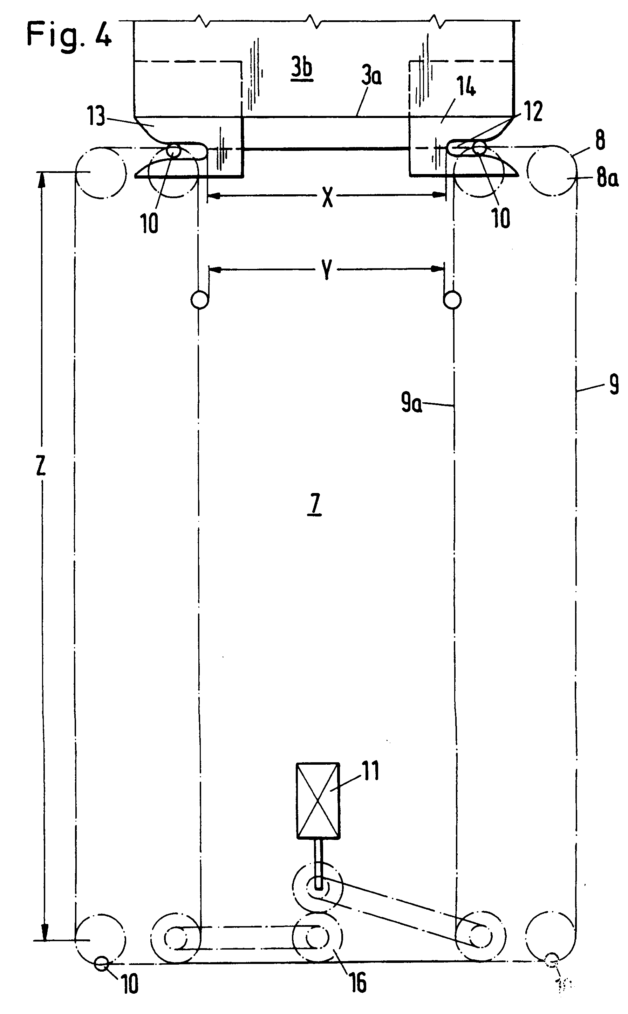

Wie die Figuren 3 und 4 zeigen, hat der Lasttisch 7 acht senkrechte Achsen 8a für Umlenkräder 8 zweier Mitnehmerzugglieder 9. Diese sind aus Rollenketten gebildet und haben je zwei nach oben vorstehende Mitnehmer 10 in Form eines Zapfens. Die Umlenkräder 8 werden von einem Motor 11 über eine Zahnradstufe 16 so angetrieben, daß die beiden Mitnehmer 10 gleichzeitig nach dem Passieren der äußeren Umlenkräder 8 in die Bereiche von Einlaufschrägen 13 von Schlitzführungen 12 gelangen. Diese sind in Platten 14 eingearbeitet, die an allen stirnseitigen Ecken der Lagerbehälter 3 befestigt sind. Die zum Bewegen der Lagerbehälter 3 erforderlichen Kräfte werden vorzugsweise in die Böden 3b und die Seitenflächen geleitet. Die Führungsflächen 15 der Schlitzführungen 12 sind durch Aufkanten der Blech-Platten 14 entstanden, die vorher einen dünnen Einschnitt erhielt.

Der Abstand X der zueinander gerichteten Enden der beiden Schlitzführungen 12 voneinander ist um einige Millimeter geringer als der Abstand Y zwischen den zapfenförmigen Mitnehmern 10 im Bereich des Innentrums 9a der Mitnehmerzugglieder 9, wie in Fig. 4 angedeutet.

Durch die Anordnung von zwei Umlenkrädern 8 nebeneinander wird eine Bewegung des Mitnehmers 10 parallel zur Stirnfläche 3a des Lagerbehälters 3 erreicht. Dies führt beim Einlaufen des Mitnehmers 10 in die gerade Schlitzführung 12 zu einem geraden Ausrichten eines möglicherweise schrägstehenden Lagerbehälters 3. Beim Erreichen der Endstellung des Lagerbehälters 3 bewirken die beiden sich auf einer Geraden bewegenden Mitnehmer 10 in die Bereiche der geraden Schlitzführungen 12 eine kurzzeitige formschlüssige Verbindung des Lagerbehälters, so daß die in dem Behälter befindliche Ware beruhigt wird.

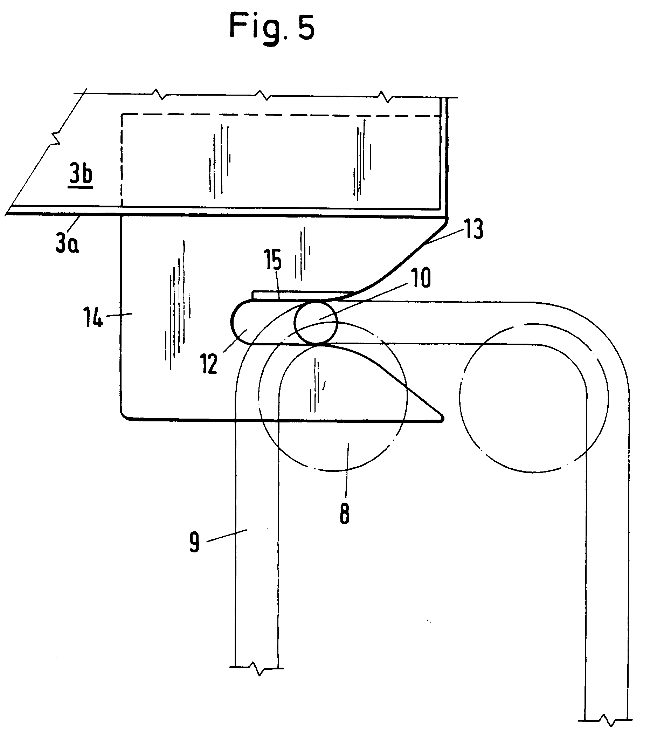

Die in den Fig. 4 und 5 gezeichneten Schlitzführungen 12 sind an den vorderen und hinteren Stirnseiten 3a der Lagerbehälter 3 angeordnet, so daß diese von einem Regal 1 in das auf der anderen Seite des Regalganges vorhandene Regal vom gleichen Regalbediengerät 4 umgesetzt werden können. Das Umsetzen von einem Regal zum gegenüberliegenden erfolgt folgendermaßen: Bei dem auf dem Lasttisch 7 befindlichen Lagerbehälter befinden sich zwei Mitnehmer 10 gegenüber der Seite, aus der der Lagerbehälter 3 um das Maß Z gezogen wurde, während sich die beiden anderen Mitnehmer 10 an der gegenüberliegenden Seite des Behälters befinden. Durch Einschalten des Motors 11 in die gleiche Förderrichtung treten zwei Mitnehmer 10 aus den Schlitzführungen 12 heraus und die anderen zwei Mitnehmer 10 treten in die Schlitzführungen auf der anderen Seite des Lagerbehälters 3 ein, den sie dann in das gegenüberliegende Fach 2 hineinschieben.

## Patentansprüche

1. Regalanlage mit in Fächern (2) eines Regals (1) angeordneten Lagerbehältern (3) und einem davor verfahrbaren Regalbediengerät (4) mit mindestens einem Lasttisch (7) mit einer Vorrichtung zum Ein- und Auslagern von Lagerbehältern (3), wobei die Vorrichtung aus zwei endlosen, um Umlenkräder (8) mit vertikalen Achsen geführten Mitnehmer-Zuggliedern (9) besteht, deren Abstand voneinander in Ein-/Auslagerrichtung mindestens der Einschubtiefe des Lagerbehälters (3) in die Fächer (2) des Regals (1) entspricht und aus den Mitnehmer-Zuggliedern (9) Mitnehmer (10) herausragen, die in an einer Stirnseite (3a) des Lagerbehälters (3) parallel dazu angeordnete Schlitzführungen (12) eingreifen,
**dadurch gekennzeichnet**,
daß die Schlitzführungen (12) aus zwei separaten, jeweils an einem Ende offenen, die Mitnehmer präzise führenden und mit Einlaufschrägen (13) versehenen Schlitzen bestehen, wobei der Abstand zwischen den geschlossenen Enden der Schlitze dem minimalen Abstand der Mitnehmer (10) quer zur Ein-/Auslagerrichtung beim Umlauf um die Umlenkräder (8) entspricht und
daß die Mitnehmerzugglieder (9) an der dem Regal (1) zugewandten Seite des Regalbediengeräten (4) an jeder Schlitzführung (12) zwischen zwei Umlenkerädern (8) parallel zur Stirnseite (3a) des Lagerbehälters (3) geführt sind.

2. Regalanlage nach Anspruch 1,
dadurch gekennzeichnet,
daß die Schlitzführungen (12) an dem Lagerbehälter (3) befestigte, vor der Stirnfläche (3a) vorstehende, am Boden (3b) befestigte Platten (14) sind.

3. Regalanlage nach Anspruch 1,
dadurch gekennzeichnet,
daß die Schlitzführungen (12) an den sich gegenüberliegenden Stirnflächen (3a) des Lagerbehälters (3) vorhanden sind.

4. Regalanlage nach Anspruch 1,
dadurch gekennzeichnet,
daß die Mitnehmerzugglieder (9) Rollenketten sind, aus denen die Mitnehmer (10) als Stifte nach oben herausragen.

5. Regalanlage nach den Ansprüchen 1 und 4,
dadurch gekennzeichnet,
daß jedes Mitnehmerzugglied (9) zwei sich gegenüberliegende Mitnehmer (10) hat.

6. Regalanlage nach Anspruch 1,
dadurch gekennzeichnet,
daß die Achsen (8a) der Umlenkräder (8) senkrecht auf dem Lasttisch (7) des Regalbediengerätes (4) angeordnet sind.

## Claims

1. Rack installation with storage containers (3), which are disposed in compartments (2) of a rack (1), and a rack operating unit (4) which can be moved in front and has at least one load table (7) with a device for depositing and removing storage containers (3), the device consisting of two endless driving tension members (9), which are guided around guide pulleys (8) with vertical shafts and the spacing of which in the deposit/removal direction corresponds at least to the depth of insertion of the storage container (3) in the compartments (2) of the rack (1), and drivers (10) projecting out of the driving tension members (9), which drivers engage in slot guides (12) disposed at one end face (3a) of the storage container (3) parallel thereto, characterised in that the slot guides (12) consist of two separate slots which are each open at one end, precisely guide the drivers and are provided with bevelled entry edges (13), the spacing between the closed ends of the slots corresponding to the minimum spacing of the drivers (10) transversely to the deposit/removal direction when moving around the guide pulleys (8), and that the driving tension members (9) are guided between two guide pulleys (8) parallel to the end face (3a) of the storage container (3) at each slot guide (12) on the side of the rack operating unit (4) which faces the rack (1).

2. Rack installation according to claim 1, characterised in that the slot guides (12) are plates (14) which are secured to the bottom (3b) of the storage container (3) and project in front of the end face (3a).

3. Rack installation according to claim 1, characterised in that the slot guides (12) are provided at the opposite end faces (3a) of the storage container (3).

4. Rack installation according to claim 1, characterised in that the driving tension members (9) are roller chains, from which the drivers (10) project upwards as pins.

5. Rack installation according to claims 1 and 4, characterised in that each driving tension member (9) has two opposite drivers (10).

6. Rack installation according to claim 1, characterised in that the shafts (8a) of the guide pulleys (8) are disposed perpendicularly on the load table (7) of the rack operating unit (4).

## Revendications

1. Installation de rayonnage, comportant des bacs de stockage (3) agencés dans des cases (2) d'un rayonnage (1) et un appareil de service de rayonnage (4) déplacable devant ceux-ci, ayant au moins une table de charge (7) présentant un dispositif pour la mise en place et le retrait de bacs de stockage (3), le dispositif étant constitué de deux organes de tracton sans fin à entraîneurs (9), guidés autour de roues de renvoi (8) à axes verticaux, dont la distance l'un de l'autre, dans la direction de mise en place ou de retrait, correspond au moins à la profondeur d'introduction du bac de stockage (3) dans les cases (2) du rayonnage (1) et des entraîneurs (10) faisant saillie des organes de traction (9), lesquels s'engagent dans des guides à fentes (12) agencés parallèlement à une face frontale (3a) du bac de stockage (3),
caractérisée en ce que les guides à fentes (12) sont constitués de deux fentes séparées, à chaque fois ouvertes à une extrémité, guidant précisément les entraîneurs et munies de chanfreins d'entrée (13), la distance entre les extrémités fermées des fentes correspondant à la distance minimale des entraîneurs (10) transversalement à la direction de mise en place ou de retrait lors du renvoi autour des roues de renvoi (8), et en ce que les organes de traction à entraîneurs (9) sont guidés sur le côté, en regard du rayonnage (1), de l'appareil de service du rayonnage (4) sur chaque guide à fentes (12) entre deux roues de renvoi (8) parallèlement à la face frontale (3a) du bac de stockage (3).

2. Installation de rayonnage selon la revendication 1,
caractérisée en ce que les guides à fentes (12) sont des plaques (14) fixées au bac de stockage (3), en salle devant la face frontale (3a), et fixées au fond (3b).

3. Installation de rayonnage selon la revendication 1,
caractérisée en ce que les guides à fentes (12) sont présents sur les faces frontales opposées (3a) du bac de stockage (3).

4. Installation de rayonnage selon la revendication 1,
caractérisée en ce que les organes de traction à entraîneurs (9) sont des chaînes à rouleaux, desquelles les entraîneurs (10) font saillie vers le haut sous forme de broches.

5. Installation de rayonnage selon les revendications 1 et 4,
caractérisée en ce que chaque organe de traction à entraîneurs (9) présente deux entraîneurs (10) opposés.

6. Installation de rayonnage selon la revendication 1,
caractérisée en ce que les axes (8a) des roues de renvoi (8) sont disposés perpendiculairement sur la table de charge (7) de l'appareil de service (4) du rayonnage.
